# DEMANDE DE BREVET EUROPEEN

(11) **EP 4 765 591 A1**
(43) Date de publication de la demande: **24.06.2026**
(21) Numéro de dépôt: 25225423.0
(22) Date de dépôt: 19.12.2025
(51) Int. Cl.: H02K 3/50, H02K 11/33, H02K 5/22

(54) **MOTEUR ÉLECTRIQUE À CONNEXION SIMPLIFIÉE**

(30) Priorité: 20.12.2024 FR 2415025
(71) Demandeur: Sonceboz Mechatronics Boncourt SA, 2926 Boncourt (CH)
(72) Inventeur: THEILLER, Julien, 2926 Boncourt (CH)
(74) Mandataire: IP Trust

(57) **Abrégé**

L'invention concerne un moteur électrique comprenant un stator avec des bobines alimentées par des conducteurs se terminant par des lames conductrices s'étendant axialement. Un circuit imprimé, disposé perpendiculairement à cette direction, comporte des trous métallisés. Les lames conductrices sont connectées via des moyens de connexion fourchus : chaque connecteur comprend une paire de fourchettes planes parallèles, espacées de 0,3 à 3 fois l'épaisseur d'une fourchette, chaque fourche formant deux jambages recevant la lame par déformation élastique. L'extrémité opposée forme une tête conductrice insérable depuis la face inférieure du circuit imprimé. Chaque paire traverse deux trous métallisés parallèles et est soudée côté opposé au stator, assurant ainsi une fixation mécanique et électrique. Le circuit imprimé comprend des ensembles de quatre trous alignés sous les lames conductrices.

## Description

Moteur électrique comportant une connexion du stator avec le circuit imprimé par des fourchettes accouplées conductrices.

### Domaine de l'invention

La présente invention concerne le domaine de la connexion électrique de composants électriques sur un circuit imprimé, et notamment des connexions pour le passage de courants élevés, typiquement de 50 à 200 ampères, à des tensions de 12 à 72 volts. L'invention concerne plus particulièrement le raccordement des bobinages d'un moteur électrique à un circuit imprimé.

De tels moteurs comportent de façon usuelle un rotor et un stator formé par une culasse présentant des dents statoriques bobinées, nécessitant d'être alimentée électriquement. Il est connu de prévoir des lames conductrices, par exemple en cuivre, permettant de raccorder les câbles d'alimentation par des fiches fourchues mise en place au moment de l'assemblage du moteur.

### Etat de la technique

On connaît dans l'état de la technique le brevet FR3045236B1 qui propose un moteur électrique comportant un circuit imprimé présentant un insert conducteur traversé par des trous de connexion et un ensemble bobiné présentant des liaisons électriques terminées par des fiches de connexion, comportant en outre des pièces de connexion présentant une tige dont la section transversale extérieure est complémentaire de la section desdits trous de connexion, la pièce de connexion présentant à son extrémité proximal un épaulement d'une section supérieure à la section desdits trous de connexion, l'extrémité opposée présentant une fente s'étendant jusqu'audit épaulement et présentant du coté distal une ouverture de largeur supérieure ou égale à la section desdites fiches de connexions et au moins un rétrécissement de largeur inférieure à la section desdites fiches de connexion, pour assurer une expansion du col de ladite pièce de connexion engagée dans le trou de l'insert du circuit imprimé.

On connaît aussi la demande de brevet DE102015110417 décrivant un élément de contact pour la connexion électriquement conductrice d'une pluralité de composants électriques, ayant un corps de base allongé ayant une première extrémité axiale et une seconde extrémité axiale, un sur la première extrémité axiale formé un contact de fourche pour fixer de manière amovible un premier composant électrique, un à la deuxième extrémité axiale un contact de fourche en forme ou un contact enfichable pour la fixation amovible d'un second composant électrique.

La demande de brevet US2022/247141 propose un moteur électrique comportant un rotor qui est monté rotatif autour d'un axe de rotation et un stator qui présente un noyau de stator et des bobines enroulées sur le noyau de stator, les enroulements étant formés à partir d'un fil d'enroulement comportant des extrémités de fil d'enroulement, et les extrémités de fil d'enroulement étant mises en contact de façon électrique avec une carte de circuit imprimé côté frontal au moyen d'éléments de raccord, les éléments de raccord présentant au moins deux contacts autodénudants dans lesquels respectivement une extrémité de fil d'enroulement d'un enroulement de stator est reçue, chaque élément de raccord présentant une seule liaison électrique avec la carte de circuit imprimé, et l'élément de raccord présentant un corps de base qui est placé, une fois monté, en appui contre la carte de circuit imprimé avec son côté inférieur, et lesdits deux contacts autodénudants présentant respectivement une fente de serrage orientée verticalement par rapport au côté inférieur du corps de base et les fentes de serrage étant formées au moyen de branches espacées qui s'étendent à partir du corps de base, au moins deux branches étant réalisées de façon élastique.

### Inconvénients de l'art antérieur

Ces solutions ne sont pas totalement satisfaisantes car lors de l'assemblage, notamment robotisé, le rapprochement du circuit imprimé et des éléments de connexion en direction du stator pour l'engagement des connecteurs fourchus sur les lames de connexion peut provoquer des déformations ou des désalignements inopinées en cas de léger décalage, ce qui peut conduire à un raccordement défectueux, voire une dégradation de certains éléments.
Notamment, les pièces de connexions insérées par le dessus du circuit imprimé peuvent être chassés de leur logement par l'effort axial exercé par le déplacement en direction du stator, et les connecteurs peuvent être déformés par torsion ou pliage lorsque la direction de l'effort n'est pas parfaitement axiale.

### Solution apportée par l'invention

Afin de remédier à ces inconvénients, la présente invention concerne un moteur électrique comportant :
- un stator supportant des bobines alimentées par des conducteurs terminés par des lames conductrices s'étendant dans une direction axiale
- un circuit imprimé présentant des trous métallisés, s'étendant dans un plan perpendiculaire à ladite direction axiale
- la liaison entre lames conductrices et ledit circuit imprimé étant assuré par des moyens de connexion fourchus insérés dans ledit circuit imprimé (300) et enfichés sur lesdites lames conductrices
caractérisé en ce que :
- ledit moyens de connexion fourchu est constitué par une paire de fourchettes accouplées planes parallèles espacées d'une distance comprise entre 0,3 et 3 fois l'épaisseur d'une fourchette, chaque fourchette présentant deux jambages formant une fourche pour l'insertion par déformation élastique d'une lame conductrice, prolongée à l'extrémité opposée par une tête conductrice de section inférieure à la section desdits trous du circuit imprimé pour une insertion dans le circuit imprimé depuis sa surface inférieure orientée du côté dudit stator
- chacune desdites paires de fourchettes accouplées étant implantés sur ledit circuit imprimé en traversant deux trous métallisés parallèles, et par une soudure sur la face du circuit imprimé opposée audit stator, et traversant au moins partiellement lesdits trous métallisés
- ledit circuit imprimé présentant des ensembles des quarterons de trous disposés dans la projection desdites lames conductrices dudit stator.

Selon des variantes de réalisation :
- lesdits jambages présentent des protubérances, et la soudure traverse le circuit imprimé pour recouvrir une partie desdites protubérances desdits jambages accouplés.
- la soudure traverse le circuit imprimé pour former un bourrelet entre les fourchettes accouplées planes d'une paire
- ladite tête conductrice présente deux protubérances de section rectangulaire, et les trous dudit circuit imprimé présentent une section ronde
- lesdites lames conductrices sont entourées par un manchon surmoulé
- lesdits manchons présentent des zones intérieures de guidage des quatre jambages d'une paires de fourchettes accouplées conductrices

### Description détaillée d'un exemple non limitatif de réalisation

La présente invention sera mieux comprise à la lecture de la description qui suit, concernant un exemple non limitatif de réalisation illustré par les dessins annexés où :

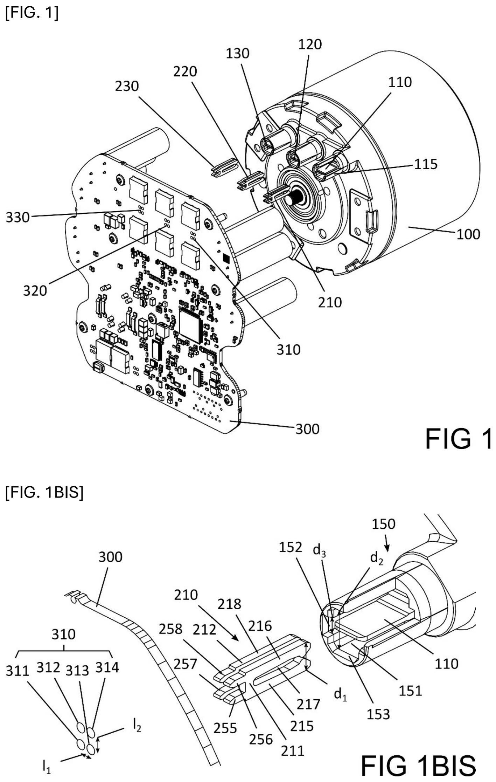

[FIG. 1] La figure 1 illustre une vue éclatée, en perspective de trois quarts avant, d'un moteur électrique selon l'invention
[FIG. 1BIS] La figure 1BIS illustre une vue en perspective d'une paire de fourchettes accouplées selon l'invention
[FIG. 2] La figure 2 illustre une vue éclatée, en perspective de trois quarts arrière, du moteur électrique selon l'invention
[FIG. 3] La figure 3 illustre une vue détaillée une vue éclatée, en perspective de trois quarts arrière, en coupe partielle, du moteur électrique mettant en évidence des éléments spécifiques liés à l'assemblage des lames conductrices, des fourchettes accouplées conductrices et du circuit imprimé

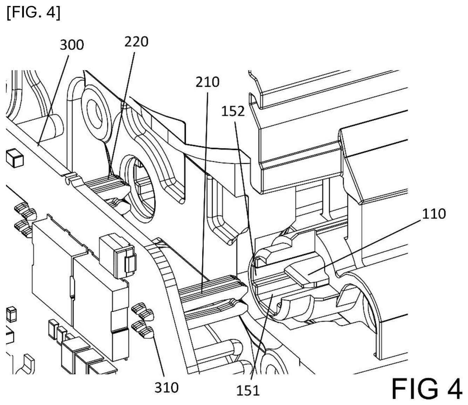

[FIG. 4] La figure 4 illustre une vue détaillée une vue éclatée, en perspective de trois quarts avant, en coupe partielle, du moteur électrique mettant en évident des éléments spécifiques liés à l'assemblage des lames conductrices, des fourchettes accouplées conductrices et du circuit imprimé
[FIG. 5] La figure 5 représente une vue en coupe d'une fourchette conductrice insérée dans un trou métallisé du circuit imprimé (300)
[FIG. 6] La figure 6 représente une vue en coupe d'une paire de fourchettes conductrices (210, 220, 230) insérées dans un trou métallisé du circuit imprimé (300), selon un plan perpendiculaire à celui illustré par la figure précédente.

### Principes de fonctionnement

L'invention concerne un système de connexion qui améliore la fiabilité, réduit les risques de désalignement et facilite l'assemblage robotisé grâce à l'utilisation de paires de fourchettes accouplées (210, 220, 230) de lames conductrices (110, 120, 130) orientées axialement depuis le stator du moteur électrique (100).

Le principe de l'invention concerne plus spécialement la configuration des paires de fourchettes accouplées (210, 220, 230) illustré par la figure [FIG 1BIS] : chacune est constituée de deux fourchettes planes (211, 212) légèrement écartées transversalement, chacune des fourchettes présentant deux jambages (215, 216 ; 217, 218) aptes à venir pincer la lame (110) lorsqu'elle est insérée entre les quatre jambages (215, 216 ; 217, 218). Les jambages sont prolongés par des têtes conductrices présentant deux protubérances (255, 256 ; 257, 258) aptes à être insérées dans des ensembles de 4 trous métallisés (310, 320, 330) d'un circuit imprimé (300). L'insertion des deux fourchettes sur le circuit imprimé (300) assure leur stabilité et leur écartement ainsi que leur orientation axiale, perpendiculaire au plan du circuit imprimé (300). Lors du rapprochement du moteur (100) et du circuit imprimé (300), les lames (110, 120, 130) viendront en contact avec quatre points des fourchettes accouplées (210, 220, 230) correspondante, ce qui assurera une stabilité améliorée lors de l'effort d'insertion et évitera un basculement inopiné qui se produit lorsque le contact est assuré seulement par deux points alignés.

La figure 1 illustre un moteur électrique (100) comprenant de façon connue un stator et un rotor (non explicitement montrés dans cette vue éclatée), avec des bobines reliées par des lames conductrices (110, 120, 130). Ces lames conductrices (110, 120, 130) sont disposées axialement, elles relient les bobinages du stator au circuit imprimé

(300). Ces lames (110, 120, 130) servent de connecteurs pour transmettre l'énergie électrique avec une grande stabilité mécanique aux pistes du circuit imprimé (300) par l'intermédiaire de fourchettes accouplées conductrices (210, 220, 230).

Les jambages de ces fourchettes accouplées (210, 220, 230) permettent une insertion par déformation élastique des lames (110, 120, 130).

Les fourchettes accouplées conductrices (210, 220, 230) sont soudées sur la face opposée au stator, garantissant une connexion fiable et durable. La soudure pénètre dans les trous métallisés (310, 320, 330) pour renforcer la fixation des fourchettes accouplées et garantir une robustesse accrue de l'assemblage.

Les lames conductrices (110, 120, 130) s'insèrent dans les fourchettes accouplées (210, 220, 230) depuis la direction axiale, tandis que le circuit imprimé (300) est placé perpendiculairement, optimisant l'alignement mécanique et électrique.

Les lames conductrices (110, 120, 130) jouent un rôle central dans le fonctionnement du moteur électrique selon l'invention. Ce rôle est d'établir une liaison électrique et mécanique entre les bobinages du stator et le circuit imprimé (300).

Les lames conductrices (110, 120, 130) servent de pont électrique entre les bobinages du stator, qui génèrent ou reçoivent le courant électrique, et le circuit imprimé

(300), qui distribue ou régule ce courant, par l'intermédiaire des fourchettes accouplées (210, 220, 230). Elles transmettent des courants élevés (typiquement entre 50 et 200 ampères) sous des tensions de 12 à 72 volts, avec un minimum de pertes électriques grâce à leur structure en matériaux conducteurs de haute qualité, comme le cuivre ou des alliages conducteurs.

Les lames conductrices (110, 120, 130) sont spécialement conçues pour s'insérer dans les fourchettes accouplées (210, 220, 230) élastiques. Ce système d'insertion par déformation élastique garantit une connexion électrique solide et fiable, grâce à la pression exercée par les jambages des fourchettes accouplées (210, 220, 230) sur les lames (110, 120, 130) et facilite un assemblage rapide et automatisé, en supprimant le besoin de soudures complexes au niveau des lames (110, 120, 130) elles-mêmes. En plus de leur rôle électrique, les lames (110, 120, 130) fournissent une assistance mécanique en formant un point de guidage pour garantir un alignement parfait entre le stator et le circuit imprimé (300). Leur orientation dans une direction axiale et leur rigidité empêchent les désalignements ou basculements pendant l'assemblage robotisé.

Certaines variantes intègrent des manchons surmoulés autour des lames conductrices (110, 120, 130), renforçant leur stabilité et facilitant le guidage dans les fourchettes accouplées (210, 220, 230).

Les lames conductrices (110, 120, 130), grâce à leur masse et leur matériau, participent également à la dissipation de la chaleur générée par le passage de courants élevés. Elles minimisent ainsi les risques de surchauffe, protégeant les composants environnants.

Les manchons isolants surmoulés (150, 160, 170), qui entourent optionnellement les lames conductrices (110, 120, 130) protègent les connexions contre les courts-circuits, guident les fourchettes accouplées (210, 220, 230) pour un alignement parfait et isolent électriquement les lames des autres parties du moteur (100).

Ces manchons isolants (150, 160, 170), forment des enveloppes rigides ou semi-rigides moulées directement autour des lames (110, 120, 130). Leur forme est optimisée pour guider les contours des fourchettes accouplées (210, 220, 230), avec des zones de guidage interne qui assurent un alignement précis des lames par rapport aux fourchettes conductrices préalablement solidarisées au circuit imprimé par soudure.

Ils peuvent être fabriquées dans différentes tailles et sections en fonction des besoins spécifiques (courant à transmettre, contraintes d'espace, etc.).

Les manchons (150, 160, 170) empêchent tout désalignement des lames conductrices lors de leur insertion dans les fourchettes. Cette fonction est essentielle, notamment dans les procédés d'assemblage robotisé, où un léger décalage pourrait endommager les composants ou entraîner une connexion défectueuse.

Ils renforcent la stabilité mécanique des lames en réduisant les vibrations et les mouvements parasites pendant le fonctionnement du moteur.

Les manchons (150, 160, 170) agissent comme une barrière isolante, empêchant les courts-circuits entre les lames conductrices (110, 120, 130) ou avec d'autres composants métalliques environnants.

Ils protègent également les lames contre les agressions externes, comme l'humidité, les poussières ou les contaminants chimiques, ce qui est crucial pour assurer la durabilité du système. Les zones de guidage internes des manchons (150, 160, 170) sont spécialement configurées pour aligner précisément les lames (110, 120, 130) avec les jambages des fourchettes. Cette caractéristique garantit une insertion facile et un contact optimal sans forcer. Les manchons (150, 160, 170) permettent également de répartir la pression exercée par les fourchettes de manière uniforme sur les lames (110, 120, 130), évitant ainsi toute déformation ou contrainte localisée. Les manchons (150, 160, 170) contribuent à maintenir les lames dans une orientation parfaitement axiale, alignée avec les trous métallisés du circuit imprimé (300), facilitant l'assemblage et assurant un contact électrique fiable.

Ils empêchent les efforts latéraux ou de torsion qui pourraient être appliqués sur les lames conductrices pendant l'insertion des fourchettes ou en cas de vibrations.

Ainsi, les manchons (150, 160, 170) présentent une lumière principale (151) de forme carrée, dont la longueur (d₂) est inférieure au double de la distance (d₁) entre les bords des jambages (215, 216 ; 217, 218) de sorte à assurer la bonne insertion des jambages de part et d'autre de la lame conductrice. La lumière principale (151) est latéralement étendue par une encoche rectangulaire (152) dans laquelle se prolonge latéralement la lame conductrice (110) au-delà de la lumière principale (151). La longueur (d₃) de l'encoche rectangulaire (152) est inférieure à la distance (d₁) entre les bords des jambages (215, 216 ; 217, 218), de sorte à assurer que les jambage reste en bonne connexion avec la la me conductrice (110) dans la lumière principale (151).

### Géométrie des fourchettes accouplées conductrices

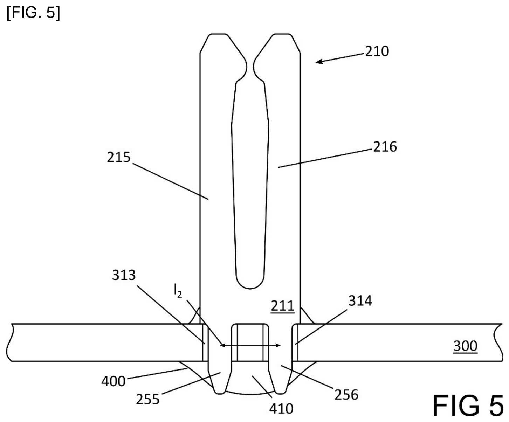

La géométrie des fourchettes accouplées conductrices (210, 220, 230) garantit un alignement précis avec les lames conductrices (110, 120, 130) grâce à leur structure plane et leur espacement optimisé. La figure 5 représente une vue détaillée et schématique d'une fourchette plane (211) conductrice insérée dans un ensemble de trous métallisés (313, 314) du circuit imprimé (300).

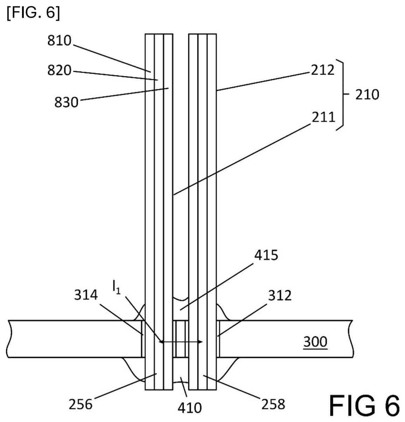

Les fourchettes planes (211, 212) conductrices sont découpées dans une tôle conductrice, par exemple en cuivre, ou dans une tôle feuilletée conductrice tel qu'illustré en figure 6 avec 3 feuilles (810, 820, 830), pour présenter deux jambages (215, 216) parallèles formant une fourchette plane (211), prolongés par une tête présentant deux protubérances (255, 256) d'une longueur légèrement supérieure à l'épaisseur du circuit imprimé (300) et d'une largeur légèrement inférieure au diamètre des trous (313, 314) du circuit imprimé (300). Ces jambages (215, 216 ; 217, 218) sont espacés d'une distance calculée pour permettre l'insertion élastique d'une lame conductrice (110, 120, 130). Les jambages (215, 216) sont incurvés vers l'intérieur à leurs extrémités pour faciliter l'insertion des lames conductrices (110, 120, 130) tout en exerçant une pression uniforme, optimisant ainsi le contact électrique. La tête conductrice formée à la base des jambages (215, 216), est configurée pour permettre l'insertion dans une paire de trous métallisés du circuit imprimé (300), assurant une transmission fiable du courant.

Les deux protubérances de la tête conductrice sont insérées dans deux trous adjacents métallisés traversant le circuit imprimé (300). Leur géométrie légèrement réduite (par rapport au diamètre du trou) facilite l'insertion initiale.

Une soudure traversante (400), recouvrant la base de la tête conductrice d'un bourrelet (410) et pénétrant dans les contours du trou (313, 314) pour renforcer la fixation mécanique et électrique. La soudure forme un second bourrelet (415) entre deux paires de fourchettes planes (211, 212) sur la face opposée du circuit imprimé (300). Ce second bourrelet (415) améliore la stabilité mécanique de la connexion, empêchant tout mouvement ou désengagement accidentel lors des contraintes mécaniques ou thermiques. Cette méthode garantit également une excellente dissipation thermique et une résistance électrique minimale.

La précision de l'alignement entre la fourchette (211) et les trous métallisé (313, 314) évite tout jeu latéral ou torsion pendant l'assemblage ou le fonctionnement.

Les dimensions relatives (épaisseur des jambages, espacement entre eux, diamètre du trou) sont soigneusement proportionnées pour respecter les contraintes de l'invention.

Les arêtes de la tête conductrice sont légèrement chanfreinées, permettant une insertion douce tout en évitant les dommages au trou métallisé.

Les matériaux de la fourchette (par exemple, du cuivre ou un alliage plaqué argent) et de la soudure sont conçus pour offrir une conductivité maximale et une résistance accrue à la corrosion.

L'invention se distingue de l'art antérieur notamment par le fait que deux fourchettes planes (211, 212 ; 221, 222 ; 231, 232) sont appariées pour formes des paires de fourchettes accouplées conductrices (210, 220, 230). Les deux fourchettes (211, 212 ; 221, 222 ; 231, 232) accouplées constituent une paire (210, 220, 230) de deux fourchettes parallèles et planes, présentant un espacement (l₁) entre les fourchettes accouplées compris entre 0,3 et 3 fois l'épaisseur d'un jambage.

La distance L₃ séparant la ligne médiane des deux des têtes (255, 256, 257, 258) des fourchettes correspond sensiblement à la distance séparant les deux jambages (215, 216).

Les jambages (215, 216 ; 217, 218) sont légèrement incurvés vers l'intérieur au niveau de leur extrémité pour faciliter le guidage et la capture de la lame conductrice

(110). La courbure interne crée une pression uniforme sur la lame (110) insérée, optimisant la connexion électrique.

L'épaisseur des jambages (215, 216 ; 217, 218) est proportionnée pour offrir une flexion élastique suffisante lors de l'insertion de la lame conductrice (210) tout en évitant la déformation plastique. La hauteur des jambages (215, 216 ; 217, 218) est ajustée pour permettre une insertion en profondeur et garantir une prise stable de la lame conductrice.

À l'extrémité opposée à la zone de fourche, chaque jambage est prolongé par une "tête conductrice". Cette tête est de section inférieure à celle des trous métallisés du circuit imprimé, facilitant son insertion.

La tête conductrice présente une section carrée ou rectangulaire pour éviter toute rotation dans les trous du circuit imprimé (300). Les arêtes de la tête sont légèrement chanfreinées pour faciliter l'insertion et réduire l'usure mécanique du circuit imprimé

(300). Les trous (311, 312, 313, 314) du circuit imprimé (300) sont ronds, pour améliorer la fixation mécanique et permettre un écoulement de soudure entre la périphérie ronde des trous métallisés et la section rectangulaire des têtes (255, 256, 257, 258) des fourchettes.

Les fourchettes accouplées peuvent inclure des nervures ou des rainures destinées à limiter l'expansion excessive des jambages sous contrainte, assurant ainsi une connexion durable et stable.

A titre d'exemple dimensionnel, les dimensions des fourchettes sont les suivantes :
- Épaisseur d'un jambage : 0,5 mm.
- Espacement entre les jambages : 1,0 mm.
- Longueur totale de la fourchette : 10 mm.
- Largeur de la tête conductrice : 1,2 mm (carrée).
- Longueur de la tête conductrice : 2 mm.

Cette géométrie détaillée est conçue pour répondre aux exigences d'alignement, de robustesse mécanique et de performance électrique, tout en s'intégrant aux processus industriels robotisés.

La figure 6 représente une vue en coupe d'une paire de fourchettes conductrices (210) insérées dans un ensemble de trous métallisés (212, 214) du circuit imprimé (300), selon un plan perpendiculaire à celui illustré par la figure précédente. Comme déjà exposé, les fourchettes sont accouplées pour former des paires de fourchettes conductrices (210, 220, 230). Les deux protubérances de la tête conductrice sont insérées dans deux trous métallisés adjacents du circuit imprimé (300), en mettant en évidence les relations spatiales et structurelles entre les éléments. Cette figure illustre une vue spécifique des paires de fourchettes, leur géométrie symétrique, et leur rôle dans la connexion des composants, complétant les aspects précédemment abordés.

La figure [FIG. 6] présente une vue en coupe transversale de deux fourchettes planes parallèles accouplées, espacées d'une distance spécifique, comprise entre 0,3 et 3 fois l'épaisseur d'une fourchette individuelle.

Chaque fourchette est constituée de deux jambages symétriques comme précédemment décrit, prolongés par une tête conductrice dont les protubérances sont insérées dans les trous métallisés du circuit imprimé (300).

Ces deux fourchettes forment une "paire" qui saisit, par déformation élastique, une lame conductrice insérée dans les interstices créés par leurs jambages.

Le circuit imprimé (300) comporte des séries de quatre trous métallisés adjacents, alignés verticalement avec les jambages des fourchettes et transversalement avec les prolongements des têtes conductrices appariées. Ces trous traversants permettent une fixation robuste et stable des prolongements des têtes conductrices.

Les soudures traversantes sont visibles autour des têtes des fourchettes, renforçant la connexion mécanique et électrique sur la face opposée du circuit imprimé (300).

La proximité et l'alignement précis des deux fourchettes dans cette configuration permettent une prise ferme et homogène sur une lame conductrice unique en définissant un quadrilatère d'insertion d'une lame (110, 120, 130).

La géométrie symétrique des fourchettes accouplées (210, 220, 230) garantit une répartition uniforme de la pression exercée par les jambages sur la lame, ce qui améliore la qualité de la connexion électrique et limite l'usure des matériaux.

Les lignes de guidage internes des trous métallisés aident à aligner parfaitement les têtes conductrices lors de l'insertion. Cette conception réduit les risques de désalignement ou de dommages au circuit imprimé (300).

La configuration en paires empêche toute rotation ou torsion des fourchettes, assurant une stabilité mécanique accrue même sous contrainte thermique ou vibratoire.

La structure représentée dans la figure 6 montre une modularité élevée, permettant d'adapter cette conception à des lames conductrices de différentes dimensions en ajustant l'espacement des fourchettes ou la taille des trous métallisés.

Cette flexibilité est essentielle pour des applications où des courants élevés (jusqu'à 200 ampères) ou des tensions modérées (12 à 72 volts) sont nécessaires.

Détails supplémentaires sur les matériaux :

Les fourchettes peuvent être constituées d'un alliage conducteur recouvert d'un revêtement plaqué argent ou similaire, améliorant la conductivité et la résistance à la corrosion.

Les soudures traversantes incluent une base renforcée qui pénètre partiellement dans le circuit imprimé (300), augmentant la durabilité de la connexion.

La figure 6 approfondit les aspects de l'interaction entre le circuit imprimé (300) et les paires de fourchettes conductrices, en mettant l'accent sur :

La configuration en paires parallèles, essentielle pour une connexion efficace avec une lame conductrice unique.

### Soudure au Circuit Imprimé (300)

La base de la tête conductrice est conçue pour permettre la pénétration de la soudure dans le trou métallisé. Cette géométrie garantit une connexion mécanique et électrique optimale. Une variante inclut un bourrelet formé par la soudure, recouvrant partiellement les jambages pour renforcer la structure.

Les jambages et la tête conductrice peuvent être recouverts d'un matériau conducteur, tel qu'un alliage plaqué argent, pour améliorer la conductivité et prévenir la corrosion.

### Manchons Guidés :

Les lames conductrices peuvent être entourées de manchons (150, 160, 170) surmoulés pour une protection mécanique et électrique. Ces manchons (150, 160, 170) incluent des poches de guidage pour aligner précisément les lames avec les fourches. Ces manchons comportent des zones de guidage internes qui alignent précisément la lame avec les jambages lors de l'insertion.

Réduction des risques de désalignement et de déformation lors de l'assemblage robotisé.
- Amélioration de la robustesse mécanique grâce à la soudure traversante et au guidage des lames.
- Simplicité d'intégration dans les processus industriels, minimisant les erreurs humaines

### Vue détaillée du moteur selon l'invention

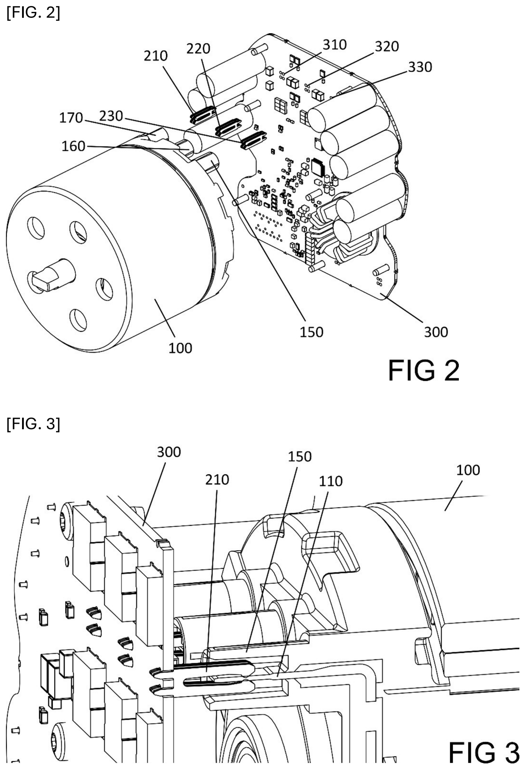

Le moteur est représenté dans son intégralité par la figure [FIG. 2], avec le carter protecteur (150) cylindrique abritant le stator et le rotor.

Les lames conductrices (110, 120, 130) terminant les bobinages du stator, s'insèrent dans les fourchettes accouplées conductrices (210, 220, 230) montées sur le circuit imprimé (300). Leur orientation axiale visible dans cette vue assure le guidage efficient et la connexion électrique sûre lors de l'application du circuit imprimé (300) disposé transversalement, perpendiculaire à la direction axiale, par un déplacement axial.

Le circuit imprimé (300) est installé de manière perpendiculaire à l'axe du moteur. Il comporte plusieurs composants électroniques montés en surface (CMS), responsables du contrôle et de la régulation du moteur. Ces composants incluent des condensateurs utilisés pour le filtrage des courants et l'amélioration de la stabilité électrique du moteur, des résistances, des processeurs et d'autres circuits de puissance.

Les trous métallisés (310, 320, 330), alignés avec les fourchettes accouplées conductrices, constituent des points de connexion pour les fourchettes accouplées conductrices (210, 220, 230) et de soudure traversante des pieds des fourchettes accouplées conductrices (210, 220, 230).

Ces fourchettes accouplées conductrices (210, 220, 230) permettent une liaison élastique des lames conductrices (110, 120, 130) avec les pistes métalliques du circuit imprimé (300). Ces fourchettes accouplées conductrices (210, 220, 230) prévoient deux jambages flexibles qui maintiennent des lames conductrices (110, 120, 130) insérées sous tension élastique.

Le circuit imprimé (300) est solidement maintenu par des supports ou des entretoises qui garantissent sa position par rapport au moteur. Cette structure réduit les vibrations et évite les désalignements pendant le fonctionnement.

Les soudures sont traversantes pour fixer solidement les fourchettes accouplées sur le circuit imprimé (300) tout en assurant une connexion électrique de haute qualité.

La figure 3 fournit une vue détaillée en coupe partielle du moteur électrique et met en évidence des éléments spécifiques liés à l'assemblage des lames conductrices, des fourchettes accouplées conductrices et du circuit imprimé. Elle complète les descriptions des figures précédentes en approfondissant les aspects mécaniques et fonctionnels non encore décrits.

La figure [FIG. 3] illustre l'insertion axiale des lames conductrices (110, 120, 130) dans les fourchettes accouplées (210, 220, 230). Les jambages élastiques des fourchettes accouplées appliquent une pression uniforme sur les lames, ce qui assure une connexion fiable et minimise les résistances électriques. Les lames conductrices (110, 120, 130) sont entourées par un manchon surmoulé assurant un guidage de la fourchette correspondant lors de l'insertion par l'alignement précis des lames avec les fourchettes accouplées pour éviter toute déviation pendant l'assemblage. Ces manchons fournissent également une isolation électrique supplémentaire pour protéger contre les courts-circuits et améliorant la robustesse mécanique de l'ensemble en limitant les vibrations et les mouvements parasites.

La coupe partielle [FIG. 3] met en évidence la proximité et l'interaction entre les composants internes du moteur et le circuit imprimé (300). Les trous métallisés (310, 320, 330) sur le circuit imprimé (300) sont bien alignés avec les têtes des fourchettes accouplées (210, 220, 230) pour garantir une insertion et une soudure optimales.

La figure [FIG. 3] montre le raccordement direct et compact entre le stator et le circuit imprimé (300). Les fourchettes accouplées (210, 220, 230) jouent un rôle critique en agissant comme des ponts conducteurs flexibles mais robustes, adaptés à des courants élevés (50 à 200 ampères) et à des tensions intermédiaires (12 à 72 volts).

La figure 3 illustre l'intégration mécanique et fonctionnelle du système, en mettant en avant les solutions techniques qui assurent :
- Une liaison électrique stable entre le stator et le circuit imprimé (300) via les fourchettes accouplées (210, 220, 230).
- Une protection mécanique et électrique grâce aux manchons surmoulés.
- Une facilité d'assemblage et une robustesse accrue grâce à la soudure traversante.

### Procédé d'Assemblage

Les moyens de connexion fourchus sont insérés dans les trous métallisés du circuit imprimé (300) depuis la surface inférieure, orientée vers le stator. Une fois insérés, ils traversent le circuit imprimé (300) pour être soudés sur la face supérieure. Les lames conductrices du stator sont insérées dans les fourches des connecteurs par un mouvement axial. La flexibilité élastique des fourches assure une bonne prise sans endommager les lames.

Les soudures traversent parfois le circuit imprimé (300) pour former un bourrelet entre les fourchettes accouplées planes, renforçant ainsi l'assemblage.

## Revendications

1. - Moteur électrique (100) comportant :
- un stator supportant des bobines alimentées par des conducteurs terminés par des lames conductrices (110, 120, 130) s'étendant dans une direction axiale
- un circuit imprimé (300) présentant des trous métallisés (310, 320, 330), s'étendant dans un plan perpendiculaire à ladite direction axiale
- la liaison entre lames conductrices et ledit circuit imprimé étant assuré par des moyens de connexion (210, 220, 230) fourchus insérés dans ledit circuit imprimé (300) et enfichés sur lesdites lames conductrices
**caractérisé en ce que** :
- ledit moyens de connexion fourchu (210, 220, 230) est constitué par une paire de fourchettes accouplées planes parallèles espacées d'une distance comprise entre 0,3 et 3 fois l'épaisseur d'une fourchette, chaque fourchette présentant deux jambages formant une fourche pour l'insertion par déformation élastique d'une lame conductrice, prolongée à l'extrémité opposée par une tête conductrice de section inférieure à la section desdits trous du circuit imprimé pour une insertion dans le circuit imprimé depuis sa surface inférieure orientée du côté dudit stator
- chacune desdites paires de fourchettes accouplées étant implantés sur ledit circuit imprimé en traversant deux trous métallisés parallèles, et par une soudure sur la face du circuit imprimé opposée audit stator, et traversant au moins partiellement lesdits trous métallisés
- ledit circuit imprimé présentant des ensembles de quarterons de trous disposés dans la projection desdites lames conductrices dudit stator.

2. - Moteur électrique (100) selon la revendication 1 **caractérisé en ce que** lesdits jambages présentent des protubérances, et **en ce que** la soudure traverse le circuit imprimé (300) pour recouvrir une partie desdits protubérances des jambages accouplés (210, 220, 230).

3. - Moteur électrique (100) selon la revendication précédente **caractérisé en ce que** la soudure traverse le circuit imprimé (300) pour former un bourrelet entre les fourchettes accouplées (210, 220, 230).

4. - Moteur électrique (100) selon la revendication 1 **caractérisé en ce que** ladite tête conductrice présente deux protubérances de section transversale rectangulaire (256 ; 257), et **en ce que** les trous dudit circuit imprimé (300) présentent une section ronde.

5. - Moteur électrique (100) selon la revendication 1 **caractérisé en ce que** lesdites lames conductrices (110, 120, 130) sont entourées par un manchon surmoulé (159, 160, 170).

6. - Moteur électrique (100) selon la revendication précédente **caractérisé en ce que** lesdits manchons (110, 120, 130) présentent des zones intérieures de guidage des quatre jambages d'une paires de fourchettes accouplées conductrices.
